# EUROPÄISCHE PATENTSCHRIFT

(11) **EP 2 599 153 B1**
(45) Veröffentlichungstag und Bekanntmachung des Hinweises auf die Patenterteilung: **09.07.2014**
(21) Anmeldenummer: 11735390.4
(22) Anmeldetag: 20.07.2011
(51) Int. Cl.: H01M 10/60, H01M 2/10

(54) **VORRICHTUNG ZUR SPANNUNGSVERSORGUNG MIT EINER KÜHLANORDNUNG**
POWER SUPPLY DEVICE WITH COOLING ARRANGEMENT
DISPOSITIF POUR L'ALIMENTATION EN TENSION AVEC UNE INSTALLATION DE REFROIDISSEMENT

(30) Priorität: 30.07.2010 DE 102010038681
(43) Veröffentlichungstag der Anmeldung: 05.06.2013
(73) Patentinhaber: Bayerische Motoren Werke Aktiengesellschaft, 80809 München (DE)
(72) Erfinder: WEILEDER, Stephan, 81371 München (DE); KÖSTER, Stephan, 52379 Langenwehe (DE); LÖFFLER, Robert, 85368 Moosburg (DE); LUSTIG, Robert, 81679 München (DE); MEIJERING, Alexander, 80807 München (DE)
(86) Internationale Anmeldenummer: PCT/EP2011/003628
(87) Internationale Veröffentlichungsnummer: WO 2012/013315

(56) Entgegenhaltungen:
- EP-A1- 2 068 390
- DE-A1-102008 059 953
- US-A1- 2010 062 321

## Beschreibung

Die Erfindung betrifft eine Vorrichtung zur Spannungsversorgung, insbesondere eines Kraftfahrzeugs, mit zumindest einem Energiespeichermodul, das aus mehreren prismatischen Speicherzellen gebildet ist, die, zumindest in einer Reihe gestapelt, hintereinander angeordnet und elektrisch miteinander verschaltet sind, wobei die Speicherzellen des zumindest einen Energiespeichermoduls bodenseitig in thermischem Kontakt mit einer Kühlanordnung stehen.

In einer üblicherweise als Batterie bezeichneten Vorrichtung zur Spannungsversorgung eines Kraftfahrzeugs kommt meist eine Mehrzahl an Energiespeichermodulen zum Antrieb von Fahrzeugen, beispielsweise von Elektrofahrzeugen oder Hybridfahrzeugen, zum Ansatz. Ein jeweiliges Energiespeichermodul besteht typischerweise aus mehreren gestapelten prismatischen Speicherzellen. Die einzelnen Speicherzellen enthalten elektrochemische Zellen der Batterie. Der Stapel aus den einzelnen Speicherzellen wird zumeist über eine mechanische Endplatte und Zuganker zu dem Energiespeichermodul verspannt Die Endplatten und Zuganker dienen neben der mechanischen Fixierung der Module zueinander insbesondere dazu, eine Verformung durch Gasdruckänderungen, welche beim Betrieb in den im Inneren der Module angeordneten elektrochemischen Zellen auftreten, entgegenzuwirken. Derartige Energiespeichermodule benötigten in der Regel eine Kühlung, um die benötigte Betriebstemperatur sicherzustellen.

Aus der US 2010/062321 A1 ist eine Kühleinrichtung für eine Fahrzeug-Batterie bekannt, die eine Feder anordnung aufweist.

Aus der DE 10 2006 010 063 A1 ist eine Kühleinrichtung für eine Fahrzeug-Batterie bekannt, bei der eine bodenseitige Flüssigkeitskühlung einer Mehrzahl einzelner etwa stabförmiger Batteriezellen vorgesehen ist. Die Flüssigkeitskühlung wird durch ein Basisgehäuse realisiert, das einen abgeschossene und flüssigkeitsdichten Kühlmittelraum mit einem Einlass und einem Auslass für eine Kühlflüssigkeit, z.B. Kühlwasser, aufweist und druckdicht und explosionsgeschützt ausgebildet ist. Ein Vorteil dieser Vorgehensweise besteht darin, dass die Batterie oder ein fertig gestelltes Energiespeichermodul mit einer geringen Anzahl an Bauteilen hergestellt werden kann. Allerdings ist das Basisgehäuse aufgrund seiner komplexen Gestalt teuer und aufwändig herzustellen.

Eine bodenseitige Kühlung von Speicherzellen eines Energiespeichermoduls ist weiterhin aus der EP 2 068 390 A1 bekannt. Bei den dort vorgeschlagenen Ausgestaltungen wird die Kühlanordnung an einem aus prismatischen Speicherzellen bestehenden Speicherzellen-Stapel fixiert. Ein Nachteil dieser Vorgehensweise besteht darin, dass das Energiespeichermodul und die Kühlanordnung zu einem Halbzeug vorgefertigt werden müssen bevor eine Weiterverarbeitung erfolgen kann.

Es ist daher Aufgabe der vorliegenden Erfindung, eine Vorrichtung zur Spannungsversorgung, insbesondere eines Kraftfahrzeugs, anzugeben, welche ein vereinfachtes Handling und damit geringere Herstellungskosten bei effizienter Kühlung der Speicherzellen der Vorrichtung ermöglicht.

Diese Aufgabe wird gelöst durch eine Vorrichtung zur Spannungsversorgung gemäß den Merkmalen des Patentanspruches 1. Vorteilhafte Ausgestaltungen ergeben sich aus den abhängigen Patentansprüchen.

Die Erfindung schafft eine Vorrichtung zur Spannungsversorgung, insbesondere eines Kraftfahrzeugs, mit zumindest einem Energiespeichermodul, das aus mehreren prismatischen Speicherzellen gebildet ist, die, zumindest in einer Reihe gestapelt, hintereinander angeordnet und elektrisch miteinander verschaltet sind, wobei die Speicherzellen des zumindest einen Energiespeichermoduls bodenseitig in thermischem Kontakt mit einer Kühlanordnung stehen.

Erfindungsgemäß weist die Kühlanordnung eine Anzahl an Flachrohren auf, die durch eine Federanordnung im Wesentlichen flächig an den Boden der Speicherzellen gepresst werden, wobei die Federanordnung zwischen einem Gehäuseboden der Vorrichtung und den Flachrohren angeordnet ist und sich an dem Gehäuseboden der Vorrichtung abstützt, und wobei der Gehäuseboden relativ zu dem zumindest einen Energiespeichermodul fixiert ist.

Durch die simple Verspannung und den planaren Aufbau der Kühlanordnung ist die Montage der Kühlanordnung in der Vorrichtung zur Spannungsversorgung einfach und prozesssicher. Gegenüber anderen Varianten, bei denen die Kühlanordnung beispielsweise über eine Spannvorrichtung oder andere Haltemittel mit dem zumindest einen Energiespeichermodul verbunden werden muss, weist die erfindungsgemäße Vorrichtung einen Gewichtsvorteil auf. Die Verwendung einer Federanordnung stellt sowohl vom Materialeinsatz als auch vom Produktionsaufwand eine kostengünstige Lösung dar. Durch die Federanordnung ist sichergestellt, dass die Flachrohre flächig an den Boden der Speicherzellen gepresst werden. Als Flachrohre werden Leitungen zur Führung von Fluiden bezeichnet, die eine Vielzahl an Einzelleitungen in einem im Querschnitt rechteckigen Mantel aufweisen. Mantel und Einzelleitungen sind aus einem gut Wärme leitenden Metall gebildet. Durch diese Maßnahmen wird eine gleichmäßige Kühlung der Speicherzellen des zumindest einen Energiespeichermoduls sichergestellt.

Gemäß einer zweckmäßigen Ausgestaltung umfasst die Federanordnung eine Anzahl an Federelementen, wobei ein jeweiliges Federelement ein zugeordnetes Flachrohr die Kühlanordnung an den Boden der Speicherzellen des zumindest einen Energiespeichermoduls presst. Durch die Anzahl an Federelementen und den zugeordneten Flachrohren kann festgelegt werden, an welchen sowie an wie vielen Abschnitten die Kühlanordnung an den Boden der Speicherzellen gepresst wird. Die Anzahl kann beispielsweise abhängig von der Größe der Kühlanordnung gewählt werden, um einen guten thermischen Kontakt zwischen Kühlanordnung und Energiespeichermodul(en) zu erzielen. Die Wahl der Anzahl an Federelementen und zugeordneten Flachrohren kann ebenfalls unter dem Gesichtspunkt der Kosten für jedes Federelement sowie des durch jedes zusätzliche Federelement-Flachrohrpaar eingebrachten zusätzlichen Gewichts erfolgen. Die "korrekte" Wahl der Anzahl an Federelementen/Flachrohren kann durch eine Berechnung oder durch einen einfachen Test ausfindig gemacht werden.

Gemäß einer weiteren Ausgestaltung ist vorgesehen, dass die Federelemente in einem Schnitt quer zur Längsrichtung federnde Beine bzw. Flügel aufweisen, welche sich an dem Gehäuseboden abstützen und bei Verformung eine in Richtung der Speicherzellen wirkende Kraft erzeugen. Um elastische sowie Druck erzeugende Eigenschaften zu erhalten, ist es zweckmäßig, wenn die Federelemente aus Kunststoff oder einem Metall, z.B. Stahl, gefertigt sind. Durch die Geometrie der Beine bzw. Flügel, insbesondere deren Länge und/oder deren Querschnitt, können in einer dem Fachmann bekannten Weise die elastischen Eigenschaften festgelegt werden.

Um die Handhabung beim Zusammenbau der erfindungsgemäßen Vorrichtung zu erleichtern, ist es zweckmäßig, wenn die Federelemente der Federanordnung an dem zugeordneten Flachrohr vorfixiert sind. Beispielsweise können die einzelnen Federelemente über eine Clipsverbindung an den Flachrohren befestigt sein. Entsprechende Vorsprünge bzw. Nasen können an den Federelementen oder den Flachrohren ausgebildet sein.

Gemäß einer weiteren zweckmäßigen Ausgestaltung weist die Kühlanordnung mit dem Energiespeichermodul und/oder mit dem Gehäuseboden über die Kraftbeaufschlagung durch die Federelemente hinaus keine weitere mechanische Verbindung auf. Dies bedeutet, dass keine Vorfertigung eines Halbzeugs, bestehend aus Energiespeichermodul und Kühlanordnung bzw. Kühlanordnung und Gehäuse und dergleichen, bereitgestellt werden muss. Sämtliche Einzelkomponenten können beim Einbringen der Vorrichtung zur Spannungsversorgung in ein Fahrzeug bereitgestellt und dann dort verbaut werden. Hierdurch wird die Montage wesentlich vereinfacht.

Zur weiteren Verbesserung des thermischen Übergangs zwischen dem Energiespeichermodul und der Kühlanordnung ist eine elastische und/oder Wärme leitende Beschichtung zwischen dem Boden der Speicherzellen des zumindest einen Energiespeichermoduls und der Kühlanordnung vorgesehen. Die Beschichtung kann beispielsweise in Gestalt einer Folie oder eines Klebers ausgebildet sein. Die Elastizität der Beschichtung sorgt für einen Ausgleich von Unebenheiten oder Oberflächenrauhigkeiten der aneinander grenzenden Komponenten, wodurch über die gesamte Fläche ein gleichmäßiger thermischer Übergang gegeben ist.

Gemäß einer weiteren zweckmäßigen Ausgestaltung ist das Energiespeichermodul mit dem Gehäuseboden der Vorrichtung kraft- und/oder formschlüssig miteinander verbunden. Hierdurch kann die Kühlanordnung zusammen mit der Federanordnung zwischen dem zumindest einen Energlespeichermodul und dem Gehäuseboden "verspannt" werden, so dass sich der gewünschte flächige Kontakt zwischen der Kühlanordnung und dem Boden der Speicherzellen ergibt. Vorzugsweise wird eine lösbare Verbindung, in Gestalt von Schrauben, verwendet, um im Falle eines Defekts einen einfachen Austausch jeweiliger Komponenten zu erlauben.

In einer weiteren vorteilhaften Ausgestaltung sind die Kühlkanäle in der Kühlanordnung derart ausgebildet, dass unter jeder der Speicherzellen des zumindest einen Energiespeichermoduls eine gleiche Anzahl an ein Kühlmedium führenden Hin- und Rückleitungen vorgesehen ist. Als Kühlmedium kann ein Kühlmittel (einphasige Flüssigkeiten, wie z.B. Wasser-Glykol-Gemisch) oder auch Kältemittel, wie z.B. R134a, R1234yF oder R744, verwendet werden. Kältemittel umfassen solche Medien, die während des Wärmetauschprozesses ihren Aggregatszustand ändern.

Eine gleiche Anzahl an Kühlmedium führenden Hin- und Rückleitungen ermöglicht eine symmetrische Anordnung der Kühlmedium führenden Kanäle. Hierdurch ist eine gleichmäßige Wärmeabfuhr von den Speicherzellen gewährleistet. Insbesondere kann hierdurch eine Anforderung erfüllt werden, nach der sämtliche Speicherzellen eines Energiespeichermoduls untereinander maximal einen Temperaturunterschied von 5 Kelvin aufweisen dürfen.

Die Erfindung wird nachfolgend näher anhand eines Ausführungsbeispiels in der Zeichnung erläutert. Es zeigen:
- Fig. 1: eine schematische Darstellung einer erfindungsgemäßen Vorrichtung zur Spannungsversorgung in einer Querschnittsansicht,
- Fig. 2: eine weitere schematische Darstellung der Vorrichtung aus Fig. 1 im Querschnitt, bei der zusätzlich ein Halteelement dargestellt ist, und
- Fig. 3: eine schematische Darstellung der erfindungsgemäßen Vorrichtung zur Spannungsversorgung gemäß Fig. 1 von unten.

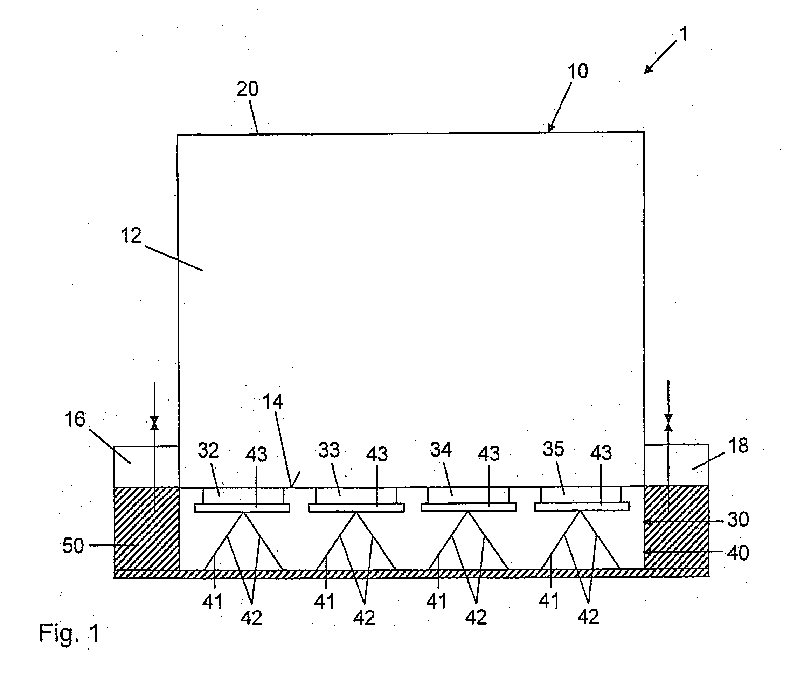

In Fig. 1 ist eine einzelne prismatische Speicherzelle 12 eines in seiner Gesamtheit eine Vielzahl an zumindest in einer Reihe gestapelten, hintereinander angeordneten und elektrisch miteinander verschalteten Speicherzellen aufweisenden Energiespeichermoduls 10 in einer Seitenansicht zu erkennen. Die Speicherzelle 12 besteht typischerweise aus einer oder mehreren einzelnen elektrochemischen Zellen, welche in der hier gewählten Darstellung im Inneren der Speicherzelle 12 im Verborgenen liegen. Beispielsweise auf einer Vorderseite 20 weist die Speicherzelle 12 Anschlussterminals erster und zweiter Polarität auf. Die Anschlussterminals sind in der Figur nicht dargestellt. Auf der mit dem Bezugszeichen 14 gekennzeichneten Rückseite der Speicherzelle 12, welche einen Boden der Speicherzelle 12 darstellt, sind keine Anschlussterminals vorgesehen. Eines der Anschlussterminals, typischerweise der Plus-Pol der Speicherzelle, kann elektrisch mit einem Gehäuse der Speicherzelle 12 verbunden sein. Das Gehäuse der Speicherzelle 12 besteht vorzugsweise aus einem gut Wärme leitenden Material, in der Regel Aluminium.

Das Energiespeichermodul 10 besteht, wie bereits erläutert, aus mehreren Speicherzellen, welche zumindest in einer Reihe gestapelt, hintereinander angeordnet und elektrisch miteinander so verschaltet sind, dass eine vorgegebene Spannung erreicht wird. Eine erfindungsgemäße Vorrichtung zur Spannungsversorgung umfasst wenigstens ein derartiges Energiespeichermodul.

Die Speicherzellen (von denen in Fig. 1 lediglich eine erkennbar ist) des Energiespeichermoduls 10 stehen bodenseitig in thermischem Kontakt mit einer Kühlanordnung 30. Grundsätzlich kann genau ein Energiespeichermodül der Kühlanordnung zugeordnet sein. Ebenso kann eine Mehrzahl an Energiespeichermodulen mit der Kühlanordnung in thermischem Kontakt stehen.

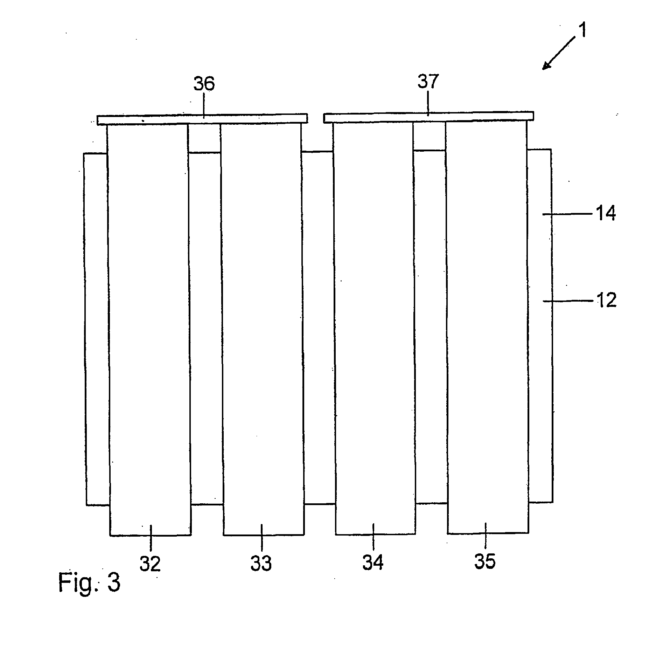

Die Kühlanordnung 30 umfasst im Ausführungsbeispiel vier parallel zueinander verlaufende Flachrohre 32, 33, 34, 35, wie dies auch gut aus der Fig. 3 der erfindungsgemäßen Vorrichtung 1 zu erkennen ist. Jedes der Flachrohre 32, 33, 34, 35 umfasst in einer dem Fachmann bekannten Weise eine Vielzahl an Einzelleitungen in einem im Querschnitt (vgl. Fig. 1) rechteckigen Mantel. Die Einzelleitungen und der rechteckige Mantel eines jeweiligen Flachrohres können durch Verlöten miteinander verbunden sein. Ebenso kann die Gestalt des Flachrohres durch einen Strangpressprozess erzeugt sein. Mantel und Einzelleitung bestehen aus einem gut Wärme leitenden Material, insbesondere Metall, wie z.B. Stahl. Die Einzelleitungen eines jeweiligen Flachrohrs 32, 33, 34, 35 können strömungstechnisch Innerhalb des Mantels miteinander verbunden sein oder auch nicht.

Die Flachrohre 32, 33, 34, 35 grenzen mit ihrer großen, flachen Seite an den Boden 14 der Speicherzellen 12 bzw. des Energiespeichermoduls 10. Die Querschnittsbreite eines jeweiligen Flachrohrs 32, 33, 34, 35 (d.h. die in der Zeichenebene sich von links nach rechts ergebende Breite eines jeweiligen Flachrohrs) ist durch die Anzahl an in dem jeweiligen Mantel vorgesehenen Einzelrohren definiert. Je größer die Anzahl der Einzelleitungen, desto größer ist die Querschnittsbreite und damit die Kühlleistung eines jeweiligen Flachrohres.

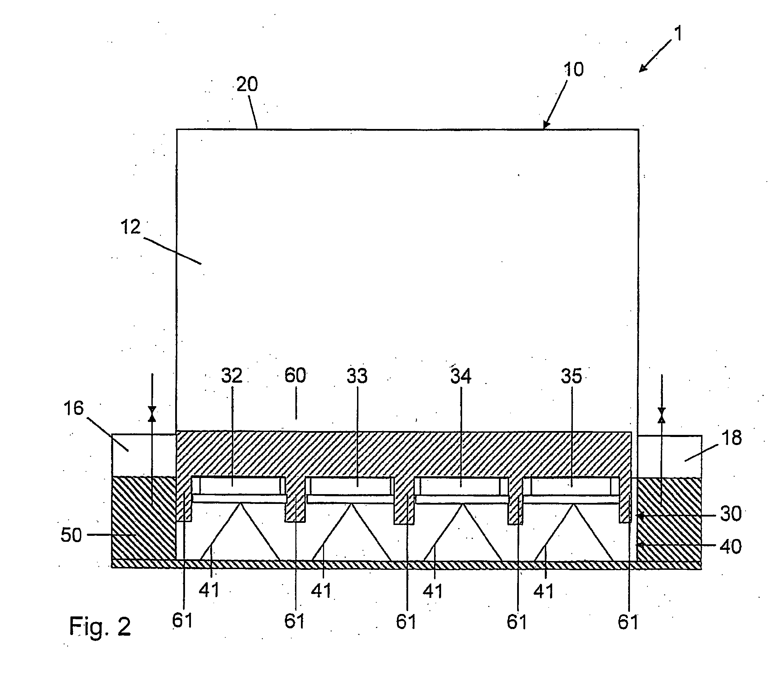

Bei dem in der Zeichnung gezeigten Ausführungsbeispiel sind die Flachrohre 32, 33, 34, 35 jeweils in einem Abstand zueinander angeordnet. Um diesen Abstand während der Montage, aber auch im Betrieb der Vorrichtung 1 sicherstellen zu können, ist ein Halteelement 60 vorgesehen, das kammartig ausgebildet ist. Dies ist schematisch in der Querschnittsdarstellung der Fig. 2 gezeigt. Das Halteelement 60 weist Zinken 61 auf, welche eine an den jeweiligen Abstand zwischen zwei Flachrohren angepasste Breite aufweisen. Ebenso sind Zinken 61 zwischen den jeweils äußersten Flachrohren 32, 34 und Wandungen des Gehäusebodens 50 vorgesehen.

Eine dauerhafte mechanische Fixierung des Haltelements 60 an der Vorrichtung 1 bzw. dem Energiespeichermodul 10 bzw. den äußersten Speicherzellen 12 eines jeweiligen Energiespeichermoduls 10 ist nicht zwingend, aber möglich. Beispielsweise ist es ausreichend, wenn die Halteelemente im Rahmen der Herstellung der Vorrichtung 1 lediglich eingeklemmt oder in die Vorrichtung eingelegt sind, so dass die definierten Abstände der Flachrohre zueinander gewährleistet sind. Vorzugsweise ist jeweils am vorderen und am hinteren Ende eines jeweiligen Energiespeichermoduls ein Halteelement 60 vorgesehen.

Das Halteelement 60 ist bevorzugt aus einem schlecht Wärme leitenden Material, insbesondere einem Kunststoff, gefertigt. Die Verwendung eines Kunststoffes verhindert, dass durch das Halteelement Kühlleistung von den Flachrohren aufgenommen wird, welche dann nicht mehr zur Kühlung der Speicherzellen 12 zur Verfügung steht.

Eine Wärmeabfuhr aus den Bereichen der Speicherzellen, welche nicht in Kontakt mit einem der Flachrohre 32, 33, 34, 35 stehen, erfolgt durch eine Wärmequerleitung über Jeweilige Zellböden der Speicherzellen 12, welche Teil der jeweiligen gut Wärme leitenden Gehäuse der Speicherzellen 12 sind.

Durch die Kühlkanäle 32, 33, 34, 35 wird zur Kühlung der Speicherzellen 12 ein Kühlmedium geleitet. Als Kühlmedium kommen Kühlmittel oder Kältemittel in Betracht. Kühlmittel sind einphasige Flüssigkeiten, wie z.B. ein Wasser-Glykol-Gemisch. Als Kältemittel kann beispielsweise R134a, R1234yF oder R744 eingesetzt werden. Allgemein sind Kältemittel Medien, die während eines Wärmetauschprozesses ihren Aggregatszustand ändern.

Die Flachrohre 32, 33, 34, 35 sind durch die Federelemente 41 flächig an den Boden 14 der Speicherzellen 12, des Energiespeichermoduls 10 gepresst. Dabei sind die Federelemente 41 zwischen einem Gehäuseboden 50 und den Flachrohren 32, 33, 34, 35 angeordnet. Der Gehäuseboden 50 dient allgemein zur Aufnahme einer Vorrichtung zur Spannungsversorgung 1, welche typischerweise eine Mehrzahl an hier beschriebenen Energiespeichermodulen 10 umfasst. Die Federelemente 41 stützen sich an dem Gehäuseboden 50 ab, wobei der Gehäuseboden 50 relativ zu dem Energiespeichermodul 10 fixiert ist.

Die Fixierung von Gehäuseboden 50 und Energiespeichermodul 10 erfolgt über Flansche 16, 18, welche an den seitlichen Stimkanten der Speicherzellen 12 ausgebildet sind. Die Flansche 16, 18 können Bestandteil der Gehäuse der Speicherzellen sein. Die Flansche 16, 18 können jedoch auch als separate Bautelle form- und/oder kraftschlüssig mit den Speicherzellen 12 verbunden sein. Die mechanische Fixierung bzw. Verbindung von Energiespeichermodul 10 und Gehäuseboden 50 erfolgt beispielsweise über in der Figur nicht näher dargestellte Schrauben, welche durch die Flansche 16, 18 hindurch in entsprechende Auflager des Gehäusebodens 50 eingeschraubt werden. Dabei entsteht ein definierter Abstand zwischen dem Gehäuseboden 50 und dem Boden 14 der Speicherzellen 12 des Energiespeichermoduls 10. Die Federelemente 41 werden bei der Verbindung von Energiespeichermodul 10 und Gehäuseboden 50 gegen die Flachrohre 32, 33, 34, 35 gepresst, so dass diese In flächigen Kontakt mit dem Boden 14 der Speicherzellen 12 geraten. Im Ergebnis entsteht ein guter Wärmeübergang zwischen den Speicherzellen des Energiespeichermoduls und der Kühlanordnung.

Die Federelemente bzw. -schienen 41 weisen in einem Schnitt quer zu deren Längserstreckung (d.h. senkrecht zur Blattebene) federnde Beine bzw. Flügel 42 auf, welche sich an dem Gehäuseboden 50 abstützen. Um einen möglichst flächigen Kontakt der Kühlanordnung zum Boden der Speicherzellen 12 sicherstellen zu können, weisen die einzelnen Federelemente bzw. Federschienen 41 ferner einen Auflageabschnitt 43 auf, welcher die durch die Verspannung wirkende Kraft auf die Flachrohre überträgt. Bei Verformung der Beine bzw. Flügel aufgrund der mechanischen Verbindung und des Abstands von Energiespeichermodul 10 und Gehäuseboden 50 wird eine in Richtung der Speicherzellen 12 (d.h. senkrecht zu deren Boden 14) wirkende Kraft erzeugt. Die Federelemente bzw. Federschienen 41 können aus Kunststoff oder aus Metall, z.B. Stahl, ausgebildet sein.

Die Anzahl der Federschienen bzw. Flachrohre bemisst sich im Wesentlichen nach der benötigten Kühlleistung. Je weniger der Federelemente bzw. Flachrohre eingesetzt werden, um die Anpresskraft zu erzeugen, desto leichter ist die Gesamtanordnung.

Außer der durch die Verspannung erzeugten Fixierung der Kühlanordnung 30 an die Speicherzellen bzw. das Energiespeichermodul existiert keine weitere mechanische Anbindung der beiden Komponenten zueinander. Dies bedeutet, die Kühlanordnung weist mit dem Energiespeichermodul 10 und/oder auch mit dem Gehäuseboden 50 über die Kraftbeaufschlagung durch die Federanordnung 40 hinaus keine weitere mechanische Verbindung auf. Hierdurch lässt sich die Vorrichtung 1 auf einfache Weise herstellen.

Im Rahmen der Herstellung werden die Federelemente 41 zusammen mit den zugeordneten Flachrohren 32, 33, 34, 35 in den Gehäuseboden eingelegt. Anschließend werden die in Fig. 2 dargestellten Halteelemente zur korrekten Ausrichtung der Flachrohre und der Federelemente eingelegt. Diese Haltelemente können auch schon auf den Flachrohren vormontiert sein. In einem weiteren Schritt werden die zu einem Energiespeichermodul 10 zusammengefassten Speicherzellen auf die Flachrohre 32, 33, 34, 35 aufgelegt. Vorzugsweise werden die zur Druckbeaufschlagung benötigten Federelemente bzw. Federschienen 41 an den Flachrohren vorfixiert. Anschließend wird das Halbzeug in den an die Größe der Kühlanordnung 30 angepassten Gehäuseboden 50 eingelegt. Schließlich erfolgt eine Verbindung des Energiespeichermoduls 10 mit dem Gehäuseboden 50, wodurch die für einen guten thermischen Übergang notwendige Kraft zur flächigen Anlage von Kühlanordnung und Energiespeichermodul 10 erzeugt wird.

Aufgrund der bodenseitigen Kühlung der einzelnen Speicherzellen 12 mittels des Kühlmediums in den Kühlkanälen 32, 34, 35 erfolgt an der Unterseite der Speicherzellen 12 eine besonders starke Kühlung. Da die Speicherzellen 12 hinsichtlich des Gehäusemantels aus einem gut wärmeleitfähigen Material, wie z.B. Aluminium, bestehen, erfolgt darüber ein guter Temperaturausgleich, wodurch eine Kühlung auch in den Bereichen oberhalb des Bodens 14 sichergestellt ist. Auf diese Weise kann eine gleichmäßige Kühlung der Speicherzellen 12 sichergestellt werden. Insbesondere ist gewährleistet, dass sämtllche Speicherzellen untereinander maximal einen Temperaturunterschied von 5 Kelvin aufweisen,

Optional kann, um den Wärmeübergang der Kühlanordnung 30 auf den Boden der Speicherzellen 12 zu optimieren und Materialtoleranzen auszugleichen, eine elastische, Wärme leitende Beschichtung vorgesehen werden. Diese wird beispielsweise auf dem Boden 14 der Speicherzellen 12 oder auf den Flachrohren 32, 33, 34, 35 angeordnet. Die Beschichtung kann als Folie oder Kleberschicht ausgebildet sein. Es ist ausreichend, wenn die Beschichtung ausschließlich im Bereich der Kontaktflächen von Flachrohren und Speicherzellen vorgesehen ist.

Um einen möglichst guten Temperaturausgleich am Boden 14 der Speicherzellen 12 sicherzustellen, ist es vorteilhaft, die Kühlmedium führenden Flachrohre symmetrisch unter den Speicherzellen 12 des Energiespeichermoduls anzuordnen. Unter jeder Speicherzelle sind somit gleich viele Hin- und Rückleitungen für das Kühlmedium angeordnet. Dies ist exemplarisch in Fig. 3 dargestellt, die ein Energiespeichermodul 10 von unten zeigt, bei dem beispielhaft sechs in einer Reihe hintereinander angeordnete Speicherzellen 12 dargestellt sind. Dabei ist ersichtlich, dass beispielhaft vier parallel verlaufende Kühlkanäle 32, 33, 34, 35 vorgesehen sind. Die Kühlkanäle 32 und 34 stellen einen Hinleiter, die Kühlkanäle 33, 35 einen Rückleiter für das Kühlmedium dar. Die Kühlkanäle 32, 33 sind über eine Umlenkung 36, die Kühlkanäle 34, 35 über eine Umlenkung 37 miteinander verbunden. Die Umlenkung 36, 37 erfolgt dabei außerhalb des Bodens der Speicherzellen 12. Der Kühlmediumstrom ist durch die Pfeile dargestellt. Die Verteilung des Kühlmediums über weitere, nicht dargestellte Kühlkanäle kann wahlweise in den Flachrohren integriert sein oder außerhalb davon erfolgen.

In den in den Figuren beschriebenen Ausführungsbeispielen ist das Energiespeichermodul aus insgesamt sechs hintereinander angeordneten Speicherzellen 12 gebildet. In der Praxis sind z.B. insgesamt zwölf Speicherzellen in zwei Reihen zu je sechs hintereinander angeordneten Speicherzellen ausgebildet. Die Anzahl der Reihen und die Anzahl der hintereinander angeordneten Speicherzellen bemessen sich nach der in einem Energiespeichermodul zu erreichenden Gesamtspannung. Es versteht sich für einen Fachmann, dass auch davon abweichende Anzahlen und Anordnungen gewählt werden könnten.

### Bezugszeichenliste

- 1: Vorrichtung zur Spannungsversorgung
- 10: Energiespeichermodul
- 12: Speicherzelle
- 14: Boden der Speicherzelle
- 16: Flansch
- 18: Flansch
- 20: Vorderseite
- 30: Kühlanordnung
- 32: Flachrohr
- 33: Flachrohr
- 34: Flachrohr
- 35: Flachrohr
- 36: Umlenkung für Kühlkanal
- 37: Umlenkung für Kühlkanal
- 40: Federanordnung
- 41: Federelement / Federschiene
- 42: Bein/Flügel des Federelements
- 43: Auflageabschnitt
- 50: Gehäuseboden
- 60: Halteelement
- 61: Zinken

## Patentansprüche

1. Vorrichtung (1) zur Spannungsversorgung, Insbesondere eines Kraftfahrzeugs, mit zumindest einem Energiespeichermodul (10), das aus mehreren prismatischen Speicherzellen (12) gebildet ist, die, zu mindestens einer Reihe gestapelt, hintereinander angeordnet und elektrisch miteinander verschaltet sind, wobei die Spelcherzellen (12) des zumindest einen Energiespeichermoduls (10) bodenseitig in thermischem Kontakt mit einer Kühlanordnung (30) stehen,
**dadurch gekennzeichnet, dass**
die Kühlanordnung (30) eine Anzahl an Flachrohren (32, 33, 34, 35) aufweist, die durch eine Federanordnung (40) an den Boden (14) der Speicherzellen (12) gepresst werden, wobei die Federanordnung (40) zwischen einem Gehäuseboden (50) der Vorrichtung und den Flachrohren (32, 33, 34, 35) angeordnet ist und sich an dem Gehäuseboden (50) der Vorrichtung abstützt, und wobei der Gehäuseboden (50) relativ zu dem zumindest einen Energiespelchermodul (10) fixiert ist.

2. Vorrichtung nach Anspruch 1, **dadurch gekennzeichnet, dass** die Federanordnung (40) eine Anzahl an Federelementen (41) umfasst, wobei ein jeweiliges Federelement (41) ein zugeordnetes Flachrohr (32, 33, 34, 35) der Kühlanordnung (30) an den Boden (14) der Speicherzellen (12) des zumindest einen Energiespeichermoduls (10) presst.

3. Vorrichtung nach Anspruch 2, **dadurch gekennzeichnet, dass** die Federelemente (41) in einem Schnitt quer zur Längsrichtung federnde Beine oder Flügel aufweisen, welche sich an dem Gehäuseboden (50) abstützen und bei Verformung eine in Richtung des zugeordneten Flachrohrs (41) oder der Speicherzellen (12) wirkende Kraft erzeugen.

4. Vorrichtung nach einem der vorhergehenden Ansprüche, **dadurch gekennzeichnet, dass** die Federelemente (41) der Federanordnung (40) an dem zugeordneten Flachrohr (32, 33, 34, 35) vorfixiert sind.

5. Vorrichtung nach einem der vorhergehenden Ansprüche, **dadurch gekennzeichnet, dass** zumindest eine kammartige Haltevorrichtung (60), die quer zur Erstreckungrichtung der Flachrohre (32, 33, 34, 35) verläuft, vorgesehen ist, welche durch Zinken (61) die Position der Flachrohre (32, 33, 34, 35) und der Federelemente unterhalb der Speicherzellen (12) des Energiespeichermoduls (10) definiert, wobei zwischen jeweils zwei Flachrohren ein Zinken (61) ausgebildet ist.

6. Vorrichtung nach einem der vorhergehenden Ansprüche, **dadurch gekennzeichnet, dass** die Kühlanordnung (30) mit dem Energiespeichermodul (10) und/oder mit dem Gehäuseboden (50) über die Kraftbeaufschlagung durch die Federanordnung (40) hinaus keine weitere mechanische Verbindung aufweist.

7. Vorrichtung nach einem der vorhergehenden Ansprüche, **dadurch gekennzeichnet, dass** eine elastische und/oder Wärme leitende Beschichtung zwischen dem Boden (14) der Speicherzellen (12) des zumindest einen Energiespeichermoduls (10) und der Kühlanordnung (30) vorgesehen ist.

8. Vorrichtung nach einem der vorhergehenden Ansprüche, **dadurch gekennzeichnet, dass** das Energiespeichermodul (10) mit dem Gehäuseboden (50) der Vorrichtung kraft- und/oder formschlüssig miteinander verbunden ist.

9. Vorrichtung nach einem der vorhergehenden Ansprüche, **dadurch gekennzeichnet, dass** die Kühlkanäle (32, 33, 34, 35) in der Kühlanordnung (30) derart ausgebildet sind, dass unter jeder der Speicherzellen (12) eine gleiche Anzahl an ein Kühlmedium führenden Hin- und Rückleitungen vorgesehen ist.

## Claims

1. A device (1) for supplying voltage, particularly in a motor vehicle, with at least one energy storage module (10) made up of several prismatic storage cells (12) stacked in at least one row, disposed behind one another and electrically connected to one another, wherein the storage cells (12) of the at least one energy storage module (10) have their base in thermal contact with a cooling arrangement (30),
**characterised in that** the cooling arrangement (30) comprises a number of flat tubes (32, 33, 34, 35) pressed by a spring arrangement (40) against the base (14) of the storage cells (12), wherein the spring arrangement (40) is disposed between a housing base (50) of the device and the flat tubes (32, 33, 34, 35) and abuts the housing base (50) and wherein the housing base (50) is fixed relative to the at least one energy storage module (10).

2. A device according to claim 1, **characterised in that** the spring arrangement (40) comprises a number of spring elements (41), wherein each spring element (41) presses an associated flat tube (32, 33, 34, 35) of the cooling arrangement (30) against the base (14) of the storage cells (12) of the at least one energy storage module (10).

3. A device according to claim 2, **characterised in that** the.spring elements (41), in a section transversely of the longitudinal direction, have spring-mounted legs or wings which abut the housing base (50) and, when deformed, generate a force acting in the direction of the associated flat tube (41) or the storage cells (12).

4. A device according to any of the preceding claims, **characterised in that** the spring elements (41) of the spring arrangement (40) are previously fixed to the associated flat tube (32, 33, 34, 35).

5. A device according to any of the preceding claims, **characterised in that** at least one comb-like retaining element (60) extending transversely of the direction of the flat tubes (32, 33, 34, 35) is provided, the comb teeth (61) thereof defining the position of the flat tubes (32, 33, 34, 35) and of the spring elements under the storage cells (12) of the energy storage module (10), wherein a tooth (61) is formed between each pair of flat tubes.

6. A device according to any of the preceding claims, **characterised in that** apart from the force applied by the spring arrangement (40), the cooling arrangement (30) has no mechanical connection to the energy storage module (10) and/or the housing base (50).

7. A device according to any of the preceding claims, **characterised in that** an elastic and/or heat-conducting coating is provided between the base (14) of the storage cells (12) of the at least one energy storage module (10) and the cooling arrangement (30).

8. A device according to any of the preceding claims, **characterised in that** the energy storage module (10) is positively and/or non-positively connected to the housing base (50) of the device.

9. A device according to any of the preceding claims, **characterised in that** the cooling ducts (32, 33, 34, 35) in the cooling arrangement (30) are constructed so that the same number of output and return cooling-medium conveying lines is provided under each storage cell (12).

## Revendications

1. Dispositif (1) pour l'alimentation en tension en particulier d'un véhicule comportant au moins un module accumulateur d'énergie (10) qui est formé de plusieurs cellules d'accumulation prismatiques (12) qui sont entassées les unes dernière les autres sur au moins une rangée, et raccordées électriquement entre elles, les cellules d'accumulation (12) du module accumulateur d'énergie (10) étant sur leur fond en contact thermique avec un dispositif de refroidissement (30),
**caractérisé en ce que**
le dispositif de refroidissement (30) comporte une série de tuyaux plats (32, 33, 34, 35) qui sont comprimés contre le fond (14) des cellules d'accumulation (12) par un dispositif élastique (40), ce dispositif élastique (40) étant monté entre le fond du boitier (50) du dispositif et les tuyaux plats (32, 33, 34, 35) et s'appuyant contre le fond de ce boitier (50), et le fond de boitier (50) étant fixe par rapport au module accumulateur d'énergie (10).

2. Dispositif conforme à la revendication 1,
**caractérisé en ce que**
le dispositif élastique (40) comporte plusieurs éléments élastiques (41), dont chacun comprime un tuyau plat (32, 33, 34, 35) associé du dispositif de refroidissement (30) contre le fond (14) des cellules d'accumulation (12) du module accumulateur d'énergie (10).

3. Dispositif conforme à la revendication 2,
**caractérisé en ce que**
les éléments élastiques (41) comportent, dans une section transversale à la direction longitudinale des bras ou des ailettes élastiques qui s'appuient contre le fond (50) du boitier, et produisent par déformation une force s'exerçant dans la direction du tuyau plat (41) associé ou de cellules d'accumulation (12).

4. Dispositif conforme à l'une des revendications précédentes, **caractérisé en ce que**
les éléments élastiques (41) du dispositif élastique (40) sont préalablement fixés sur le tuyau plat (32, 33, 34, 35) associé.

5. Dispositif conforme à l'une des revendications précédentes, **caractérisé en ce qu'**
il est prévu au moins un dispositif de retenue en forme de peigne (60) qui s'étend transversalement à la direction d'extension des tuyaux plats (32, 33, 34, 35), et qui définit par des dents (61) la position des tuyaux plats (32, 33, 34, 35) et des éléments élastiques au-dessous des cellules d'accumulation (12) du module accumulateur d'énergie (10), une dent (61) étant formée entre deux tuyaux plats respectifs.

6. Dispositif conforme à l'une des revendications précédentes, **caractérisé en ce que**
le dispositif de refroidissement (30) ne comporte aucune autre liaison mécanique avec le module accumulateur d'énergie (10) et/ou avec le fond (50) du boitier autre que la sollicitation par la force au moyen du dispositif élastique (40).

7. Dispositif conforme à l'une des revendications précédentes, **caractérisé en ce qu'**
il est prévu un revêtement élastique et/ou thermiquement conducteur entre le fond (14) des cellules d'accumulation (12) du module accumulateur d'énergie (10) et le dispositif de refroidissement (30).

8. Dispositif conforme à l'une des revendications précédentes, **caractérisé en ce que**
le module accumulateur d'énergie (10) est relié au fond (50) du boitier du dispositif par une liaison par la force ou par une liaison par la forme.

9. Dispositif conforme à l'une des revendications précédentes, **caractérisé en ce que**
les canaux de refroidissement (32, 33, 34, 35) sont réalisés dans le dispositif de refroidissement (30) de sorte que sous chacune des cellules d'accumulation (12) soit prévu un même nombre de conduites d'écoulement dans les deux sens du fluide de refroidissement.
